# EUROPÄISCHE PATENTSCHRIFT

(11) **EP 2 486 620 B1**
(45) Veröffentlichungstag und Bekanntmachung des Hinweises auf die Patenterteilung: **01.08.2018**
(21) Anmeldenummer: 11788402.3
(22) Anmeldetag: 11.11.2011
(51) Int. Cl.: H01M 4/13, H01M 4/131, H01M 4/134, H01M 4/58, H01M 4/587, H01M 4/583, H01M 10/42, H01M 10/0525, H01M 10/058

(54) **LITHIUM-IONEN-ZELLE MIT VERBESSERTEM ALTERUNGSVERHALTEN**
LITHIUM BATTERY WITH IMPROVED AGING CHARACTERISTICS
BATTERIE A LITHIUM AVEC UN COMPORTEMTENT DU VIEILLISSEMENT AMELIORE

(30) Priorität: 16.11.2010 DE 102010044008
(43) Veröffentlichungstag der Anmeldung: 15.08.2012
(73) Patentinhaber: VARTA Microbattery GmbH, 73479 Ellwangen Jagst (DE)
(72) Erfinder: KREN, Harald, A-8042 Graz (AT); KOLLER, Stefan, A-8010 Graz (AT); DROISNER, Andrea, A-8113 St. Bartholomä (AT)
(74) Vertreter: Patentanwaltskanzlei Cartagena
(86) Internationale Anmeldenummer: PCT/EP2011/069915
(87) Internationale Veröffentlichungsnummer: WO 2012/065909

(56) Entgegenhaltungen:
- EP-A1- 1 655 793
- EP-A1- 2 139 058
- US-A1- 2007 202 365
- US-A1- 2007 202 406
- US-A1- 2007 218 359
- US-A1- 2008 241 647
- US-A1- 2009 136 848

## Beschreibung

Die vorliegende Erfindung betrifft eine sekundäre galvanische Zelle, eine Batterie mit mindestens einer solchen Zelle und ein Verfahren zur Herstellung einer solchen Batterie.

Der Begriff "Batterie" meinte ursprünglich mehrere in Serie geschaltete galvanische Zellen in einem Gehäuse. Heute werden jedoch auch einzelne galvanische Zellen häufig als Batterie bezeichnet. Bei der Entladung einer Batterie findet eine energieliefernde chemische Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Die einer Zelle entnehmbare Ladung, die in starkem Maß von den Entladebedingungen abhängt, wird als Kapazität (Einheit Ah) bezeichnet. Die spezifische Ladung (Einheit Ah/kg) bzw. Ladungsdichte (Einheit Ah/L) ist ein Maß für die Anzahl an freigesetzten bzw. aufgenommenen Elektronen und/oder Ionen pro Masse- bzw. Volumeneinheit und damit für die Speicherfähigkeit von Elektroden und Batterien. Entsprechend spricht man in diesem Zusammenhang auch von der spezifischen Kapazität von Elektroden und Batterien, die ebenfalls in der Einheit Ah/kg angegeben wird. Ein großer Potentialunterschied zwischen negativer und positiver Elektrode resultiert in Kombination mit Elektrodenmaterialien hoher spezifischer Ladung bzw. Ladungsdichte in hohen Werten für die spezifische Energie (Einheit Wh/kg) bzw. die Energiedichte (Einheit Wh/L). Beim Betrieb einer Batterie sind die Geschwindigkeiten des Elektronen- und des Ionentransfers innerhalb der Batterie, insbesondere die Geschwindigkeit des Ionentransfers an Phasengrenzflächen innerhalb der Elektroden, leistungslimitierend. Die diesbezüglichen Eigenschaften von Batterien lassen sich an den Kennzahlen spezifische Leistung (Einheit W/kg) und Leistungsdichte (Einheit W/L) ablesen.

Unter den sekundären Zellen und Batterien werden vergleichsweise hohe Energiedichten von Lithium-Ionen-Batterien erreicht. Diese Batterien weisen in der Regel sogenannte Kompositelektroden auf, die neben elektrochemisch aktiven Komponenten auch elektrochemisch inaktive Komponenten umfassen. Als elektrochemisch aktive Komponenten (oft auch als Aktivmaterialien bezeichnet) für Lithium-Ionen-Batterien kommen grundsätzlich sämtliche Materialien in Frage, die Lithiumionen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien zum Einsatz kommen, die mit Lithium legierbar sind. So sind beispielsweise die Elemente Zinn, Antimon und Silizium in der Lage, mit Lithium intermetallische Phasen zu bilden. Für die positive Elektrode umfassen die zu diesem Zeitpunkt industriell verwendeten Aktivmaterialien vor allem Lithiumcobaltoxid (Li-CoO₂), LiMn₂O₄-Spinell (LiMn₂O₄), Lithiumeisenphosphat (LiFePO₄) sowie Derivate wie beispielsweise LiNi_{1/3}Mn_{1/3}Co_{1/3}O₂ oder LiMnPO₄. Sämtliche elektrochemisch aktiven Materialien sind in der Regel in Partikelform in den Elektroden enthalten.

Als elektrochemisch inaktive Komponenten sind an erster Stelle Elektrodenbinder und Stromableiter zu nennen. Über Stromableiter werden Elektronen aus den Elektroden zu- oder abgeführt. Elektrodenbinder sorgen für die mechanische Stabilität der Elektroden sowie für die Kontaktierung der Partikel aus elektrochemisch aktivem Material untereinander und zum Stromableiter. Zu einer verbesserten elektrischen Anbindung der elektrochemisch aktiven Partikel an den Stromableiter können leitfähigkeitsverbessernde Additive beitragen, die ebenfalls unter den Sammelbegriff "elektrochemisch inaktive Komponenten" zu subsumieren sind. Sämtliche elektrochemisch inaktiven Komponenten sollten zumindest im Potentialbereich der jeweiligen Elektrode elektrochemisch stabil sein und einen chemisch inerten Charakter gegenüber gängigen Elektrolytlösungen aufweisen. Gängige Elektrolytlösungen sind z.B. Lösungen von Lithiumsalzen wie Lithiumhexafluorophosphat in organischen Lösungsmitteln wie Ether und Ester der Kohlensäure.
Die genannten Aktivmaterialien für die negative Elektrode auf Kohlenstoffbasis ermöglichen reversible spezifische Kapazitäten von bis zu ca. 372 Ah/kg. Eine noch deutlich höhere Speicherfähigkeit von bis zu 4200 Ah/kg weisen die erwähnten mit Lithium legierbaren metallischen und halbmetallischen Materialien auf. Die Kapazitäten der genannten Kathodenmaterialien liegen liegen dagegen nur im Bereich zwischen 110 Ah/kg und 250 Ah/kg. Man versucht daher, die Materialien für die positive und für die negative Elektrode mengenmäßig auszubalancieren, um die faktischen Kapazitäten der Elektroden möglichst optimal aufeinander abzustimmen.

Von besonderer Bedeutung ist in diesem Zusammenhang, dass es bereits beim ersten Lade-/Entladezyklus von sekundären Lithiumionen-Zellen (der sogenannten Formierung) zur Ausbildung einer Deckschicht auf der Oberfläche der elektrochemisch aktiven Materialien in der Anode kommt (siehe D. Aurbach, H. Teller, M. Koltypin, E. Levi, Journal of Power Sources 2003, 119-121, 2). Diese Deckschicht wird als "Solid Elektrolyte Interphase" (SEI) bezeichnet und besteht in der Regel vor allem aus Elektrolytzersetzungsprodukten sowie einer gewissen Menge an Lithium, das entsprechend für weitere Lade-/Entladereaktionen nicht mehr zur Verfügung steht. Die SEI ist im Idealfall nur noch für die extrem kleinen Lithiumionen permeabel und unterbindet einen weiteren direkten Kontakt der Elektrolytlösung mit dem elektrochemisch aktiven Material in der Anode (siehe B. V. Ratnakumar, M. C. Smart, S. Surampudi, Journal of Power Sources 2001, 97-98, 137). Insofern hat die Bildung der SEI durchaus positive Effekte. Nachteilig wirken sich allerdings die Verluste an mobilem Lithium durch eben diese SEI-Bildung aus. Üblicherweise kommt es im Rahmen des ersten Ladeschrittes, abhängig von der Art und der Qualität des verwendeten Aktivmaterials und der verwendeten Elektrolytlösung, zu einem Verlust von etwa 10 % bis 35 % des mobilen Lithiums. Um diese Prozentzahl sinkt auch die erzielbare Kapazität. Diese Formierungsverluste müssen bei der Ausbalancierung von Anode und Kathode berücksichtigt werden.
In den Folgezyklen kommt es in der Regel jeweils nur noch zu geringfügigen Lithiumverlusten. Über eine höhere Zyklenzahl summieren sich diese geringfügigen Lithiumverluste jedoch zu einem wichtigen, eventuell sogar zu dem wichtigsten Parameter für Zellalterung auf (siehe J. Vetter , P. Novak, M.R. Wagner, C. Veit, K.-C. Möller, J.O. Besenhard, M. Winter, M. Wohlfahrt-Mehrens, C. Vogler, A. Hammouche, Journal of Power Sources, 2005, 269-281,147). Die Dicke der SEI-Schicht auf der Oberfläche der elektrochemisch aktiven Materialien nimmt immer mehr zu, was häufig einen deutlichen Anstieg der Zellimpedanz zur Folge hat. Hinzu kommen die immer größeren Verluste an mobilem Lithium. Diese Effekte führen zu einer kontinuierliche fortschreitenden Kapazitäts- und Leistungsabnahme der betroffenen Zelle. Die Zelle altert. WO 97/31401 A1 offenbart eine Lithiumbatterie bestehend aus einer negativen Elektrode (Bestandteile Silikonpulver, metallisches Lithium und/ oder anderen Elementen wie Zn, Ge, Al, Pb, In, Ga, Lithiumlegierungen, etc.), einer positiven Elektrode (Bestandteile Co, Ni, Mn in unterschiedlicher Zusammensetzung). Das Kapazitätsverhältnis zwischen negativer und positiver Elektrode von 1,1. Auf S. 9, Zeilen 6-30 wird beschrieben, dass in die Kohlenstoffelektrode metallische Lithiumlegierung eingebracht wird. Die Verwendung von überlithiierten Kathodenmaterialien in Kombination mit Anoden auf Basis von Kohlenstoffmaterialien kann eine Reduktion dieser Phänomene erwirken, allerdings u.U. auf Kosten der Sicherheit. Ob ein Sicherheitsproblem vorliegt, hängt vom Verhältnis von maximaler Kapazität der Anode zur Kapazität der Anode nach der Formierung ab. Beispielsweise liegt die maximale spezifische Kapazität von Anoden auf Basis von Graphit bei 372 mAh/g. Bei einem 15%igen Verlust an mobilem Lithium durch SEI-Bildung im Zuge der Formierung ist es somit theoretisch möglich, die Anode mit einer Kathode zu kombinieren, welche eine Menge an mobilen Lithiumionen enthält, die dem Äquivalent von 372 + 15% ∼ 427 mAh/g entspricht. Geht bei der Formierung jedoch weniger mobiles Lithium verlustig, so kann es zur unerwünschten Abscheidung von metallischem Lithium an der Anode kommen. Um dies zu vermeiden, werden die Anoden von Lithium-Ionen-Batterien in der Regel überdimensioniert.
Weiterhin ist problematisch, dass die Lithiierung der erwähnten Aktivmaterialien mit einer deutlichen Volumenzunahme verbunden ist. So kann das Volumen von Graphitpartikeln bei der Aufnahme von Lithiumionen bis zu 10 % zunehmen. Noch größer ist diese Volumenzunahme bei den erwähnten metallischen und halbmetallischen Speichermaterialien. Bei der Lithiierung beispielsweise von Zinn, Antimon und Silizium kann die volumetrische Ausdehnung im ersten Ladezyklus bis zu 300 % betragen. Bei der Auslagerung von Lithiumionen schrumpft das Volumen der jeweiligen Aktivmaterialien wieder und es kommt zu großen mechanischen Spannungen innerhalb der Partikel aus Aktivmaterial sowie gegebenenfalls zu einer Verschiebung der Elektrodenstruktur. Die damit verbundene mechanische Beanspruchung der Elektroden führt zum Teil in erheblichem Ausmaß zu Kontaktverlusten zwischen benachbarten Partikeln aus Aktivmaterial, was sich auf die Kapazität und die Lebensdauer der betroffenen Batterie ebenfalls negativ auswirkt.

Der vorliegenden Erfindung lag die Aufgabe zugrunde, Lithium-Ionen-Batterien mit verbessertem Alterungsverhalten bereitzustellen, bei denen die obigen Probleme nicht oder nur in verringertem Ausmaß auftreten.

Diese Aufgabe wird gelöst durch die galvanische Zelle mit den Merkmalen des Anspruchs 1, die Batterie mit den Merkmalen des Anspruchs 6 sowie das Verfahren mit den Merkmalen des Anspruchs 7. Bevorzugte Ausführungsformen der erfindungsgemäßen galvanischen Zelle sind in den abhängigen Ansprüchen 2 bis 5 angegeben. Bevorzugte Ausführungsformen des erfindungsgemäßen Verfahrens finden sich in den abhängigen Ansprüchen 8 bis 10. Der Wortlaut sämtlicher Ansprüche wird hiermit durch Bezugnahme zum Inhalt dieser Beschreibung gemacht.

Bei der erfindungsgemäßen galvanischen Zelle handelt es sich um eine sekundäre Zelle, also um eine wiederaufladbare Zelle, wie sie eingangs erwähnt wurde. Darüber hinaus handelt es sich bei der erfindungsgemäßen Zelle um eine bereits formierte Zelle, worunter im Einklang mit den obigen Ausführungen verstanden werden soll, dass sie bereits mindestens einen vollständigen Lade-/Entladezyklus durchlaufen hat, so dass es bereits zur Ausbildung der beschriebenen "solid electrolyte interphase" kam und die Verluste an Lithium in Folgezyklen nur noch zu vergleichsweise gering ausfallen. Eine formierte Zelle unterscheidet sich also strukturell von einer nicht formierten. Im Sinne der vorliegenden Anmeldung soll unter einer formierten Zelle insbesondere eine Zelle verstanden werden, bei der aufgrund bereits erfolgter SEI-Bildung im ersten Lade-/Entladezyklus die Verluste an mobilem Lithium in der Zelle in Folgezyklen weniger als 0,5 %, bevorzugt weniger als 0,25 %, insbesondere weniger als 0,1 %, betragen (jeweils bezogen auf die vor dem Zyklus verfügbare Gesamtmenge an mobilem Lithium in der Zelle).

Die erfindungsgemäße galvanische Zelle umfasst mindestens eine positive Elektrode, mindestens eine negative Elektrode, einen Elektrolyten und sogenanntes "mobiles Lithium".

Die mindestens eine positive Elektrode enthält mindestens eine Metallverbindung, welche Lithium in Form von Ionen reversibel ein- oder auszulagern vermag. Daneben umfasst sie in der Regel zumindest noch einen Elektrodenbinder, ein Leitfähigkeitsadditiv sowie gegebenefalls noch weitere Additive. Geeignete Binder und Additive sind dem Fachmann bekannt.

Bevorzugt handelt es sich bei der mindestens einen Verbindung um eine Lithium-Metalloxid oder eine Lithium-Metall-Phosphat-Verbindung, insbesondere um eine Verbindung aus der Gruppe mit LiCoO₂, LiMn₂O₄, LiFePO₄, LiNi_{1/3}Mn_{1/3}CO_{1/3}O₂, LiMnPO₄ oder eine Mischung aus zwei oder mehr dieser Verbindungen.

Die mindestens eine negative Elektrode enthält mindestens eine Kohlenstoffverbindung, welche Lithium in Form von Ionen reversibel ein- und auszulagern vermag. Zusätzlich kann die mindestens eine negative Elektrode aber auch mindestens ein Metall und/oder Halbmetall, welches mit Lithium legierbar ist, enthalten.

Neben diesen Aktivmaterialien umfasst die mindestens eine negative Elektrode in der Regel zumindest noch einen Elektrodenbinder, ein Leitfähigkeitsadditiv sowie gegebenenfalls noch weitere Additive. Geeignete Binder und Additive sind dem Fachmann bekannt. Ein besonders bevorzugter Binder auf Basis von Carboxymethylzellulose ist in der WO 2009/012899 beschrieben. Der Inhalt dieser Anmeldung wird durch Bezugnahme zum Inhalt der vorliegenden Beschreibung gemacht.

Als Kohlenstoffverbindung enthält die mindestens eine negative Elektrode bevorzugt eine graphitische Kohlenstoffverbindung. Als mit Lithium legierbares Metall und/oder Halbmetall enthält sie bevorzugt mindestens ein Mitglied aus der Gruppe mit Aluminium, Silizium, Antimon, Zinn und Cobalt. Als Mischung ist gegebenenfalls eine Zinn/Antimon- oder eine Zinn-Cobalt-Mischung bevorzugt.

Besonders bevorzugt enthält die mindestens eine negative Elektrode die interkalationsfähige Kohlenstoffverbindung und das mit Lithium legierbares Metall und/oder Halbmetall in Kombination, insbesondere als Mischung aus graphitischen Kohlenstoffpartikeln und Siliziumpartikeln. Diese sind bevorzugt in eine Bindermatrix aus einer geeigneten Carboxymethylzellulose eingelagert.

Eine Kompositanode enthaltend 20 Gew.% Silizium und 60 Gew.% graphitischen Kohlenstoff als Aktivmaterialien sowie 20% elektrochemisch inaktive Materialien (Binder und Leitfähigkeitsadditiv) weist eine spezifische Kapazität von ca. 1060 Ah/kg auf [(4200 Ah/kg * 0,2) + (372 Ah/kg * 0,6)]. Durch Variation des Anteils an Silizium kann die für die Speicherung von Lithium benötigte Kapazität flexibel eingestellt werden, ohne die Masse des benötigten Aktivmaterials wesentlich zu erhöhen.

Über den in der erfindungsgemäßen Zelle enthaltenen Elektrolyten können Lithiumionen zwischen der mindestens einen positiven und der mindestens einen negativen Elektrode hin- und herwandern. Bevorzugt handelt es sich bei dem Elektrolyten um eine Lösung eines geeigneten Leitsalzes wie Lithiumhexafluorophosphat. Als Lösungsmittel kommt bevorzugt ein organisches Lösungsmittel zum Einsatz, insbesondere ein Ether oder eine Esterverbindung der Kohlensäure.

Unter dem "mobilen Lithium" soll vorliegend Lithium verstanden werden, das für Ein- und Auslagerungsvorgänge in den Elektroden zur Verfügung steht. Wie eingangs erläutert, wird bei der Formierung einer sekundären Lithium-Ionen-Zelle die erwähnte SEI gebildet, das u.a. auch einen Teil (bis zu 35 %, s.o.) des anfänglich in der Zelle enthaltenen Lithiums irreversibel bindet. Dieses steht dann für weitere Lade-/Entladereaktionen nicht mehr zur Verfügung. Das "mobile Lithium" ist im Gegensatz dazu der Anteil an Lithium in der Zelle, der nach der Formierung noch für reversible Ein- und Auslagerungsvorgänge in den Elektroden zur Verfügung steht.

Besonders zeichnet sich eine erfindungsgemäße Zelle durch eine Merkmalskombination aus, nämlich
1. dass die Kapazität der mindestens einen negativen Elektrode zur Aufnahme von Lithium größer ist als die der mindestens einen positiven Elektrode,
2. dass die mindestens eine negative Elektrode eine höhere Kapazität aufweist, als zur Aufnahme des gesamten in der Zelle enthaltenen mobilen Lithiums erforderlich ist, und
3. dass das mobile Lithium in der Zelle in einer Menge enthalten ist, die die Aufnahmekapazität der mindestens einen positiven Elektrode überschreitet.

Diese Merkmalskombination wird im Folgenden, beginnend mit Merkmal 1, ausführlich erläutert werden.

Das erste Merkmal ist für sich gesehen noch nicht neuheitsbegründend, ist es doch aus dem Stand der Technik bekannt, negative Elektroden im Verhältnis zu den dagegen geschalteten positiven Elektroden zu überdimensionieren, um zu verhindern, dass sich beim Aufladen metallisches Lithium an der Anode abscheiden kann. Dies ist bei einer erfindungsgemäßen Elektrode jedoch ohnehin nicht möglich, da gleichzeitig die mindestens eine negative Elektrode ausreichend groß dimensioniert ist, um sämtliches in der Zelle enthaltene mobile Lithium aufzunehmen (Merkmal 2). Ein Überladen der mindestens einen negativen Elektrode mit Lithium ist somit ausgeschlossen. Gleichzeitig ist in der erfindungsgemäßen Zelle jedoch mehr mobiles Lithium enthalten, als von der mindestens einen positiven Elektrode aufgenommen werden kann (Merkmal 3). Mit anderen Worten, die erfindungsgemäße Zelle weist ein "Depot" oder einen "Pool" an mobilem Lithium auf, mit dem die oben beschriebenen geringfügigen Lithiumverluste, die im Betrieb auch noch nach der Formierung auftreten, kontinuierlich ausgeglichen werden können. Die Kapazität und die Leistung der erfindungsgemäßen Zelle bleibt daher im Vergleich zu aus dem Stand der Technik bekannten Zellen über eine größere Zyklenzahl stabil.

Das mobile Lithium ist in einer erfindungsgemäßen Zelle bevorzugt in Form von Lithiumionen, gegebenenfalls aber auch in reduzierter, metallischer Form enthalten. Die Lithiumionen sind, wenn die erfindungsgemäße Zelle vollständig aufgeladen ist, im Wesentlichen alle in der mindestens einen überdimensionierten negativen Elektrode eingelagert. Im Betrieb sind sie auf die mindestens eine negative und die mindestens eine positive Elektrode verteilt. In reduzierter, metallischer Form kann das mobile Lithium insbesondere vorliegen, wenn es anodenseitig mit einem der erwähnten mit Lithium legierbaren Metallen und/oder Halbmetallen legiert ist. Auch in dieser Form steht es für reversible Ein- und Auslagerungsvorgänge in den Elektroden zur Verfügung. Beim Entladen der erfindungsgemäßen Zelle kann das legierte Lithium oxidieren. Die entstehenden Lithiumionen können dann zur Kathode wandern.
In bevorzugten Ausführungsformen übersteigt die erwähnte Kapazität der mindestens einen negativen Elektrode zur Aufnahme von Lithium die der mindestens einen positiven Elektrode um den Faktor 1,2, bevorzugt um einen Faktor im Bereich zwischen 1,4 und 2,5.

Die Kapazität der mindestens einen negativen Elektrode ist bevorzugt zumindest gleich der Menge des gesamten in der Zelle enthaltenen mobilen Lithiums, besonders bevorzugt liegt sie um mindestens den Faktor 1,05, bevorzugt um einen Faktor im Bereich zwischen 1,1 und 2, höher, als zur Aufnahme des gesamten in der Zelle enthaltenen mobilen Lithiums erforderlich wäre.

Die Menge des mobilen Lithiums in der Zelle überschreitet die Kapazität der mindestens einen positiven Elektrode zur Aufnahme von Lithium bevorzugt mindestens um den Faktor 1,1, besonders bevorzugt um einen Faktor im Bereich zwischen 1,2 und 2.

Das Mischungsverhältnis zwischen der Kohlenstoffverbindung und dem mit Lithium legierbaren Metall und/oder Halbmetall in der negativen Elektrode liegt gegebenenfalls bevorzugt zwischen 20:1 und 1:20, besonders bevorzugt zwischen 20:1 und 1:1 (jeweils bezogen auf die eingesetzten Gewichtsmengen).

Auch jede Batterie, die mindestens eine erfindungsgemäße galvanische Zelle umfasst, wie sie oben beschrieben wurde, ist Gegenstand der vorliegenden Erfindung. Eine erfindungsgemäße Zelle kann beispielsweise in Form eines Verbundes aus flachen Elektroden und einem mit Elektrolyt getränkten Separator vorliegen. In einer erfindungsgemäßen Batterie liegt ein solcher Verbund bevorzugt in stapelartiger Anordung oder in gewickelter Form vor.

Zur Herstellung einer solchen Batterie kann insbesondere das nachfolgend beschriebene Verfahren dienen, das gleichermaßen von der hier beschriebenen Erfindung umfasst ist.

Bei dem Verfahren werden mindestens eine positive Elektrode der oben beschriebenen Art, mindestens eine negative Elektrode der oben beschriebenen Art und ein Elektrolyt, wie er oben beschrieben wurde, zu einer galvanischen Zelle kombiniert. Die so gebildete Zelle wird anschließend formiert, also mindestens einem vollständigen Lade-/Entladezyklus unterworfen.

Das erfindungsgemäße Verfahren zeichnet sich dabei insbesondere dadurch aus,
- dass die mindestens eine negative Elektrode bezüglich ihrer Kapazität zur Aufnahme von Lithium größer dimensioniert wird als die mindestens eine positive Elektrode,
- dass in die Zelle Lithium in einer Menge eingebracht wird, welche die Kapazität der mindestens einen positiven Elektrode zur Aufnahme von Lithium mindestens um den Faktor 1,2 überschreitet und
- dass die mindestens eine negative Elektrode bezüglich ihrer Kapazität zur Aufnahme von Lithium ausreichend groß dimensioniert wird, um das gesamte, nach der Formation in der Zelle enthaltene Lithium aufnehmen zu können.

Bezüglich bevorzugter Ausführungsformen des erfindungsgemäßen Verfahrens betreffend die Überdimensionierung der mindestens einen negativen Elektrode im Verhältnis zur mindestens einen positiven Elektrode und zur Menge des nach der Formation in der Zelle enthaltenen Lithiums, insbesondere des mobilen Lithiums, wird auf die obigen Ausführungen zur erfindungsgemäßen Zelle verwiesen.

Die Menge des in die Zelle eingebrachten Lithiums überschreitet die Kapazität der mindestens einen positiven Elektrode zur Aufnahme von Lithium bevorzugt um einen Faktor im Bereich zwischen 1,2 und 2.

Das Lithium wird in einigen bevorzugten Ausführungsformen mindestens teilweise über die mindestens eine positive Elektrode in die Zelle eingebracht. Insbesondere kann dies durch Verwendung überlithiierter Kathodenmaterialien geschehen. Beispielsweise stellen überlithiierte oxidische Verbindungen wie LiNi_{0.425}Mn_{0.425}Co_{0.15}O₂ eine Gruppe von Kathodenmaterialien dar, welche im ersten Ladezyklus mehr Lithiumionen für die Ladung bereitstellen können, als sie in den Folgezyklen reversibel lithiieren bzw. delithiieren können. Beim ersten Ladevorgang kann ein Transfer dieser überschüssigen Lithiumionen in die überdimensionierte Anode erfolgen.

Eine weitere Möglichkeit zur Einbringung von Lithium über die mindestens eine positive Elektrode besteht darin, der mindestens einen positiven Elektrode metallisches Lithium zuzusetzen, insbesondere passiviertes metallisches Lithium. Es ist beispielsweise möglich, Lithiumpartikel zu passivieren, indem man ihre Oberfläche mit einer dünnen Schicht aus Lithiumphoshat, Wachs oder einer Polymerschicht überzieht. Geeignete Vorgehensweisen sind in der WO 2008/143854, der WO 2009/029270 und WO 2008/045557 beschrieben. Der Inhalt dieser Dokumente wird hiermit durch Bezugnahme vollumfänglich zum Bestandteil der vorliegenden Beschreibung gemacht. Metallisches Lithium kann in positive Elektroden relativ unproblematisch bei deren Herstellung eingebracht werden, da positive Elektroden für Lithium-Ionen-Batterien in der Regel nicht-wässrig prozessiert werden.

Eine weitere Möglichkeit zur Einbringung von Lithium in die Zelle besteht darin, das Lithium mindestens teilweise über den Elektrolyten in die Zelle einzubringen, insbesondere durch Verwendung eines Leitsalzes, das an der Anode Lithiumionen freisetzen kann. Ein Beispiel für ein solches Leitsalz ist Lithiumazid (LiN₃).

In weiteren bevorzugten Ausführungsformen wird das Lithium mindestens teilweise über die mindestens eine negative Elektrode in die Zelle eingebracht. Dies kann geschehen, indem die mindestens eine negative Elektrode vorlithiiert wird, bevor sie mit der mindestens einen positiven Elektrode kombiniert wird. Im einfachsten Fall wird die mindestens eine negative Elektrode z.B. gegen eine Elektrode aus metallischem Lithium geschaltet und geladen. Die geladene mindestens eine Elektrode wird dann anschließend gegen die mindestens eine positive Elektrode geschaltet.

Alternativ oder zusätzlich kann für die mindestens eine negative Elektrode auch ein Anodenmaterial verwendet werden, das eine Verbindung beinhaltet, die Lithiumionen freisetzen kann, insbesondere ein Übergangsmetallnitrid der Formel Li_{3-X}M_{X}N aufweist. Ein solches Material verspricht hohe, stabile und reversible Kapazitäten, speichert jedoch innerhalb der Struktur mehr delithiierbares Lithium als es reversibel Ein- bzw. Auslagern kann. Nachteil dieser Materialien ist vor allem die mangelnde Zyklenstabilität und die starke Hydrolyseempfindlichkeit (siehe hierzu auch Yu Liu, Kumi Horikawa, Minako Fujiyosi, Nobuyuki Imanishi, Atsushi Hirano, Yasuo Takeda, Electrochemical Acta 49, 2004, 3487-3496 und Y. Takeda, M. Nishijima, M. Yamahata, K.Takeda, N.Imanishi, O. Yamamoto, Solid State lonics 130, 1999, 61-69).

Eine weitere Möglichkeit zur Einbringung von Lithium in die Zelle ist die Verwendung eines Elektrodenmaterials, das das bereits erwähnte metallische Lithium, insbesondere das bereits erwähnte passivierte metallische Lithium, enthält. Solche Partikel können nämlich grundsätzlich sowohl Materialien für negative als auch für positive Elektroden zugemischt werden.

Passiviertes Lithium kann gegebenenfalls sogar bei der Herstellung von wässrig prozessierten Elektroden verwendet werden. Vorteilhafter ist es jedoch, wässrig prozessierten Elektroden metallisches Lithium erst nach ihrer Herstellung, insbesondere nach ihrer Trocknung, hinzuzufügen. So kann es z.B. bevorzugt sein, dass metallisches Lithium auf die Oberfläche einer wässrig prozessierten negativen Elektrode aufgebracht wird, nachdem diese getrocknet wurde. Das Aufbringen des metallischen Lithiums kann beispielsweise mittels einer Folie erfolgen, die als Träger für die erwähnten passivierten Lithiumpartikel dient und die flächig mit der Oberfläche der Elektrode in Kontakt gebracht werden kann.

Bei anodenseitiger Einbringung ist das passivierte Lithium bereits in der Anode lokalisiert. Wie das mit den erwähnten Metallen und/oder Halbmetallen legierte Lithium kann es im Betrieb oxidieren und Lithiumionen freisetzen, die zur Kathode wandern können. Bei kathodenseitiger Einbringung wird das passivierte Lithium in der Regel bereits im Zuge des ersten Lade-/Entladezyklus der Zelle in die oben angesprochene, zusätzlichen Kapazität der Anode eingebracht.

Es sei an dieser Stelle hervorgehoben, dass sämtliche genannte bevorzugte Vorgehensweisen zur Einbringung von Lithium in die Zelle sowohl in Kombination mit anderen als auch einzeln zur Anwendung kommen können.

Wie bereits erwähnt, besteht der größte Vorteil der beschriebenen Art der Balancierung der Elektroden von Lithium-Ionen-Batterien mit hochkapazitiven Anodenmaterialien in der Beeinflussung das Alterungsverhaltens. Einige weitere wichtige Vorteile werden im Folgenden zusammengefasst.

Da die mindestens eine negative Elektrode eine höhere, in der Regel eine deutlich höhere Kapazität aufweist, als zur Aufnahme des gesamten in der Zelle enthaltenen mobilen Lithiums erforderlich ist, werden die erfindungsgemäß bevorzugt zum Einsatz kommenden hochkapazititiven Anodenmaterialien auf Basis einer Mischung von Silizium, Zinn, Antimon bzw. Komposite dieser Materialien mit auf Kohlenstoff basierenden Materialien in der Regel nicht vollständig lithiiert. Auf diese Weise sind die Materialien nur relativ geringen mechanischen Belastungen bei Lade- und Entladevorgängen ausgesetzt, was eine irreversible Inaktivierung von Aktivmaterialpartikeln, welche durch hohe, lithiierungsbedingte Volumenänderungen den elektrischen Kontakt zur Elektrode verlieren können, unterbindet.

Für Silizium beinhaltende Elektroden bedeutet das, dass die höchste Lithiierungsstufe des Silliziums (Li₂₂Si₅) und die damit verbundene maximal erzielbare Kapazität von 4200 Ah/kg im Betrieb in der Regel nicht erreicht wird. Für das formierende Laden ist grundsätzlich eine Nutzung des Siliziumlegierungskapazität in den Grenzen von 600 Ah/kg bis 4200 Ah/kg möglich. Zur Generierung des Lithiumpools wird jedoch in den Folgezyklen in der Regel eine Lithiummenge delithiiert, welche einem um 10 bis 80% geringeren Kapazitätswert entspricht. Diese Regelwerte gelten auch für Silizium, welches in Kombination mit weiteren Aktivmaterialien wie Kohlenstoffverbindungen, zur Legierung mit Lithium befähigten Metallen bzw. Halbmetallen wie Zinn, Antimon und Aluminium zu einer Kompositelektrode verarbeitet wird.

Des Weiteren ist es durch die beschriebene Art der Balancierung der Elektroden möglich, eine höhere Entladespannung der Batterie zu gewährleisten. Dadurch, dass das Anodenmaterial einmalig vollständig lithiiert, in der Folge allerdings nie vollständig delithiiert wird und somit stets eine Lithiumreserve in der Anode verbleibt, liegt die Entladespannung für die Gesamtbatterie in der Summe höher.

Viele Kathodenmaterialien, die nach herkömmlicher Art mit hochkapazitiven Anoden kombiniert werden, erlauben die vollkommene Delithiierung der in ihnen enthaltenen Lithiumionen nicht. Beispiele für solche Materialien sind Wirtsmaterialien vom Typ LiMO₂ (M = Co, Ni). Das bekannteste dieser Kathodenmaterialien ist das eine α-NaFeO₂-Struktur besitzende Lithiumcobaltoxid. Ab einer Stöchiometrie von Li_{0.5}CoO₂, übersteigt das Potential mehr als 4.2 V vs. Li/Li⁺, gefolgt von der Freisetzung von Sauerstoff, sowie einer Änderung der Struktur von kubisch zu hexagonal. Wenn nun in Zellen, welche nach Stand der Technik balanciert sind, mobiles Lithium durch die SEI Neubildung verloren geht, erfolgt ein weiterer, entscheidender Alterungsprozess. Da die Abschaltkriterien der Zelle beim Laden durch eine Sollspannung der Batterie gewährleistet werden, erfolgt bei einer zu geringen Menge an mobilem Lithium die Auslagerung der zusätzlich notwendigen Lithiummenge aus der Kathode. Diese zusätzliche Lithiummenge kann jedoch nur durch Unterschreitung der Li_{0.5}CoO₂ Struktur erreicht werden, was mit der irreversiblen Zerstörung der lithiierbaren Form des Kathodenaktivmaterials verbunden ist. Generiert man nun einen Lithiumpool in der Zelle, kann das Auftreten dieses Alterungseffektes verhindert werden, indem die Verluste an mobilem Lithium durch den Lithiumpool abgefedert werden. Es kommt, bis der Lithiumpool erschöpft ist, nicht zu einer Unterschreitung der Li_{0.5}CoO₂ Struktur der Kathode.

Weitere Merkmale der Erfindung ergeben sich auch aus der nun folgenden Beschreibung der Zeichnungen sowie bevorzugter Ausführungsformen in Verbindung mit den Unteransprüchen. Hierbei können einzelne Merkmale jeweils für sich oder zu mehreren in Kombination miteinander einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

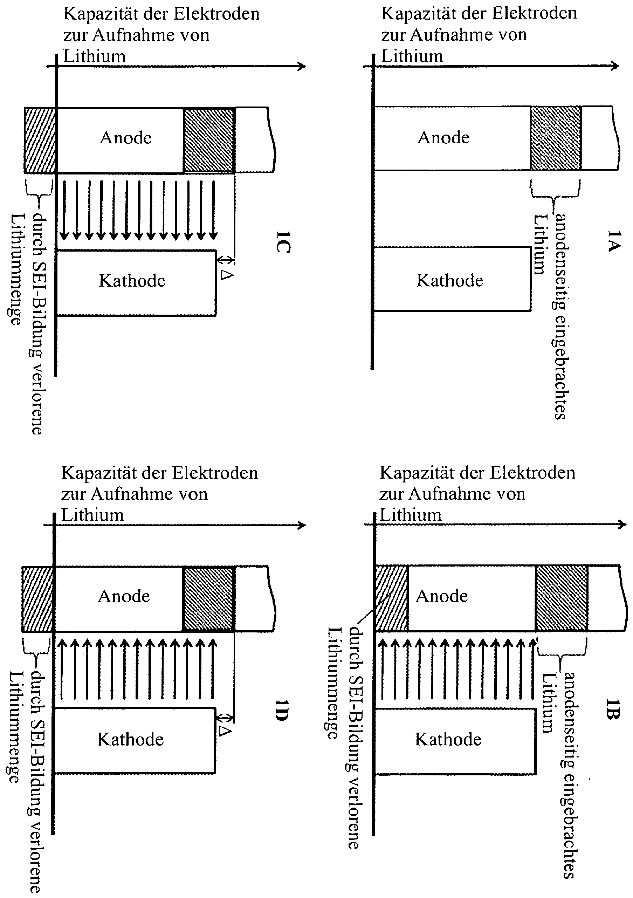

**Fig. 1** illustriert schematisch das Prinzip der vorliegenden Erfindung.

Die Höhe der in **Fig. 1A** dargestellten Säulen entspricht den Kapazitäten der Elektroden für eine erfindungsgemäße Zelle. Darüber lässt sich an der Ordinate die in den Elektroden enthaltene Lithiummenge ablesen. Die Kapazität der Anode (beispielsweise enthaltend eine Mischung aus Silizium und Graphit als Aktivmaterial) übersteigt die der Kathode (beispielsweise enthaltend eine Lithium-Metalloxidverbindung wie Lithiumcobaltoxid als Aktivmaterial) deutlich. Die Anode enthält bereits eine Menge Lithium, das in einem vorgeschalteten Schritt eingebracht wurde, beispielsweise durch Zumischen von passiviertem Lithium zu den erwähnten Aktivmaterialien. Die Menge an in der Anode enthaltenem Lithium ist schraffiert dargestellt. Die Gesamtmenge an in den Elektroden enthaltenem Lithium überschreitet die Kapazität der Kathode zur Aufnahme von Lithium deutlich.

In **Fig. 1B** sind die Vorgänge bei der ersten Ladung einer Zelle aus den in Fig. 1A abgebildeten Elektroden dargestellt. Die Kathode wird bei der Ladung der Zelle delithiiert, Lithiumionen werden in die Anode verschoben (in Pfeilrichtung). Ein Teil der Lithiumionen wird dabei durch die Bildung der SEI verbraucht. Die Menge der verbrauchten Lithiumionen ist anodenseitig am unteren Säulenende dargestellt (siehe untere Schraffur). Die Menge der verbrauchten Lithiumionen ist allerdings geringer als die Menge des in dem vorgeschalteten Schritt in die Anode eingebrachten Lithiums (obere Schraffur).

In **Fig. 1C** ist die durch SEI-Bildung verloren gegangene Lithium-Menge unter die Abszisse verschoben, da diese Menge an Lithiumionen für die reversible Ladung bzw. Entladung der Zelle nicht mehr zur Verfügung steht. Dargestellt ist eine der in Fig. 1B abgebildeten Ladung nachgeschaltete Entladung. Da das in der SEI gebundene Lithium durch das in dem vorgeschalteten Schritt in die Anode eingebrachte Lithium komensiert werden kann, ist es möglich, die Kathode wieder vollständig mit Lithiumionen zu beladen. Die Differenz Δ zwischen der Menge der in der SEI gebundenen Lithiumionen und der Menge des in dem vorgeschalteten Schritt in die Anode eingebrachten Lithiums verbleibt als Lithiumreserve in der Anode.

In **Fig. 1D** wird ein Ladevorgang nach erfolgter Formierung gezeigt. Kommt es zu einem weiteren Verlust von Lithiumionen, so werden diese aus der Lithiumreserve ersetzt. Erst wenn die Lithiumreserve erschöpft ist nimmt die Menge an für Ein- und Auslagerungsvorgänge zur Verfügung stehendem Lithium ab.

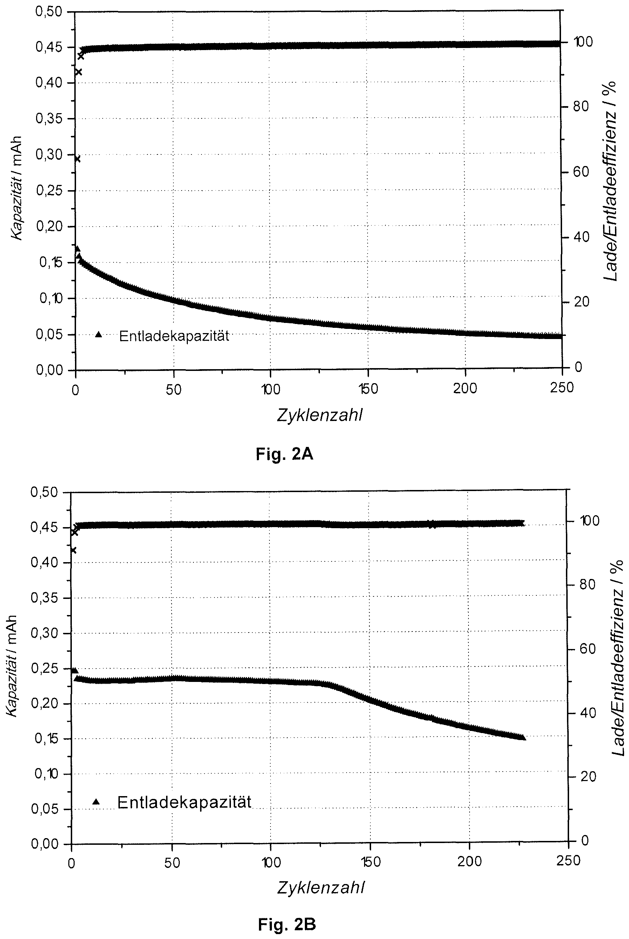

**Fig. 2A** stellt die Entladekapazitäten (untere Kurve) einer ersten Batterie sowie die Effizienzen von Ladekapazität zur Entladekapazität in Abhängigkeit der Zyklenzahl dar. Diese erste Batterie dient als Referenz zur erfindungsgemäßen Batterie.

Die Anode der ersten Batterie wurde aus einer Paste aus 8 Gew.-% Natriumcarboxymethylzellulose, 10 Gew.-% eines Leitfähigkeitsadditivs (einer Mischung aus Leitruß und Kohlenstoffnanofasern), sowie 20 Gew.-% Silizium (mittlere Partikelgröße 30 - 50 nm) und 62 Gew.-% eines graphitischen Kohlenstoffs hergestellt. Als Prozesslösungsmittel wurde Wasser verwendet (4 g Wasser auf 1 g Elektrodenmaterial). Die Paste wurde als dünne Schicht auf eine als Stromableiter dienende Kupferfolie aufgebracht.

Die Kathode der ersten Batterie bestand aus einer dünnen Schicht Elektrodenmaterial, welches auf eine ebenfalls als Ableiter dienende Aluminiumfolie aufgebracht worden war. Bei der Herstellung der Kathode kam eine Kathodenpaste bestehend aus 5 Gew.-% eines polymeren Binders auf Basis von Polyvinylidenfluorid-Hexafluorpropylen, 7 Gew.-% eines Leitfähigkeitsadditivs (Leitruß) sowie 88% LiCoO₂ als elektrochemisches Aktivmaterial zum Einsatz. Als Prozesslösungsmittel war N-Methyl-2-pyrrolidon verwendet worden (5 g N-Methyl-2-pyrrolidon auf 4 g Elektrodenmaterial).

Als Elektrolyt kam ein organischer Elektrolyt zum Einsatz, der Elektrolytsolventien auf Carbonatbasis und Lithiumhexafluorophosphat als Leitsalz enthielt.

Die Kapazität der Anode betrug 0,393 mAh (bei einer spezifischen Kapazität von rund 1070 mAh/g). Die Kapazität der Kathode betrug 0,240 mAh. Die Zelle wurde über die Zellspannung geregelt und in den Grenzen von 3 V bzw. 4,2 V geladen und entladen, wobei die nominale Zellkapazität 0,240 mAh betrug. Es wurden zwei Zyklen mit 0,1 C und Folgezyklen mit 0,5 C durchgeführt, wobei 1 C einem Strom von 0,240 mA entsprach. Als Zusatzbedingungen wurde die Kathode bis zu einer maximalen Spannung von 4,2 V und die Anode bis zu einer maximalen Spannung von 1,5 V betrieben.

**Fig. 2B** stellt die Entladekapazitäten (untere Kurve) einer zweiten, erfindungsgemäßen Batterie sowie die Effizienz von Ladekapazität zu den Entladekapazität in Abhängigkeit der Zyklenzahl dar.

Auch hier wurde die Anode aus einer Paste aus 8 Gew.-% Natriumcarboxymethylzellulose, 10 Gew.-% eines Leitfähigkeitsadditivs (einer Mischung aus Leitruß und Kohlenstoffnanofasern), sowie 20 Gew.-% Silizium (mittlere Partikelgröße 30 - 50 nm) und 62 Gew.-% eines graphitischen Kohlenstoffs hergestellt. Als Prozesslösungsmittel wurde Wasser verwendet (4 g Wasser auf 1 g Elektrodenmaterial). Die Paste wurde als dünne Schicht auf eine als Stromableiter dienende Kupferfolie aufgebracht.

Im Unterschied zur ersten Batterie wurde allerdings ein Lithiumpool in der Anode gebildet, indem die Anode gegen eine Elektrode aus metallischem Lithium geschaltet und zu 70 % der maximalen Kapazität von rund 1250 mAh/g geladen wurde. Erst nach dieser Vorlithiierung wurde die Anode mit der dazugehörigen Kathode kombiniert.

Zur Herstellung derselben wurde wie im Fall der ersten Batterie auf eine Paste bestehend aus 5 Gew.-% eines polymeren Binders auf Basis von Polyvinylidenfluorid-Hexafluorpropylen, 7 Gew.-% eines Leitfähigkeitsadditivs (Leitruß) sowie 88% LiCoO₂ als Kathodenmaterial zurückgegriffen. Diese Paste wurde auf eine als Ableiter dienende Aluminiumfolie aufgetragen und bildete dort nach Trocknung eine dünne Elektrodenschicht aus. Als Prozesslösungsmittel wurde N-Methyl-2-pyrrolidon verwendet (5 g N-Methyl-2-pyrrolidon auf 4 g Elektrodenmaterial).

Als Elektrolyt wurde ein organischer Elektrolyt verwendet, der Elektrolytsolventien auf Carbonatbasis und Lithiumhexafluorophosphat als Leitsalz enthielt.

Die vorlithiierte Anode wies eine Kapazität von 0,404 mAh auf (bei einer spezifischen Kapazität von rund 1070 mAh/g. Sie wurde mit der Kathode, die eine Kapazität von 0,253 mAh aufwies, kombiniert. Die so gebildete Zelle wurde über die Zellspannung geregelt und in den Grenzen von 3V bzw. 4,2 V geladen und entladen, wobei die nominale Zellkapazität 0,253 mAh betrug. Es wurden zwei Zyklen mit 0,1 C und Folgezyklen mit 0,5 C durchgeführt, wobei 1 C einem Strom von 0,240 mA entsprach. Als Zusatzbedingungen wurde die Kathode bis zu einer maximalen Spannung von 4,2 V und die Anode bis zu einer maximalen Spannung von 1,5 V betrieben.

Die erste und die zweite Batterie zeigten trotz identischer Bestandteile ein völlig unterschiedliches Verhalten, wie anhand von Fig. 2A und Fig. 2B zu erkennen ist. Die Generierung eines Lithiumpools in der Anode verzögerte das Altern der zweiten Batterie deutlich.

## Patentansprüche

1. Formierte sekundäre galvanische Zelle, umfassend
- mindestens eine positive Elektrode, die eine Metallverbindung enthält, welche Lithium in Form von Ionen reversibel ein- und auszulagern vermag,
- mindestens eine negative Elektrode, die eine Kohlenstoffverbindung, welche Lithium in Form von Ionen reversibel ein- und auszulagern vermag, und ein Metall und/oder Halbmetall, welches mit Lithium legierbar ist, enthält,
- einen Elektrolyten, über den Lithiumionen zwischen der mindestens einen positiven und der mindestens einen negativen Elektrode hin- und herwandern können sowie
- mobiles Lithium, das für Ein- und Auslagerungsvorgänge in den Elektroden zur Verfügung steht,
wobei
- die Kapazität der mindestens einen negativen Elektrode zur Aufnahme von Lithium größer ist als die der mindestens einen positiven Elektrode,
- die mindestens eine negative Elektrode eine höhere Kapazität aufweist, als zur Aufnahme des gesamten in der Zelle enthaltenen mobilen Lithiums erforderlich ist und
- das mobile Lithium in der Zelle in einer Menge enthalten ist, die die Kapazität der mindestens einen positiven Elektrode zur Aufnahme von Lithium überschreitet.

2. Galvanische Zelle nach Anspruch 1, **dadurch gekennzeichnet, dass** sie das mobile Lithium in Form von Lithiumionen sowie gegebenenfalls auch in reduzierter, metallischer Form enthält.

3. Galvanische Zelle nach Anspruch 1 oder Anspruch 2, **dadurch gekennzeichnet, dass** die Kapazität der mindestens einen negativen Elektrode zur Aufnahme von Lithium die der mindestens einen positiven Elektrode mindestens um den Faktor 1,2, bevorzugt um einen Faktor im Bereich zwischen 1,4 und 2,5, übersteigt.

4. Galvanische Zelle nach einem der vorhergehenden Ansprüche, **dadurch gekennzeichnet, dass** die mindestens eine negative Elektrode um einen Faktor im Bereich zwischen 1,1 und 2 höhere Kapazität aufweist, als zur Aufnahme des gesamten in der Zelle enthaltenen mobilen Lithiums erforderlich ist.

5. Galvanische Zelle nach einem der vorhergehenden Ansprüche, **dadurch gekennzeichnet, dass** die Menge des mobilen Lithiums in der Zelle die Kapazität der mindestens einen positiven Elektrode zur Aufnahme von Lithium mindestens um den Faktor 1,1, bevorzugt um einen Faktor im Bereich zwischen 1,2 und 2, überschreitet.

6. Batterie, umfassend mindestens eine galvanische Zelle nach einem der vorhergehenden Ansprüche.

7. Verfahren zur Herstellung einer Batterie, insbesondere einer Batterie nach Anspruch 6, bei dem
- mindestens eine positive Elektrode, die eine Metallverbindung enthält, welche Lithium in Form von Ionen reversibel ein- und auszulagern vermag,
- mindestens eine negative Elektrode, die eine Kohlenstoffverbindung, welche Lithium in Form von Ionen reversibel ein- und auszulagern vermag, und ein Metall und/oder Halbmetall, welches mit Lithium legierbar ist, enthält und
- ein Elektrolyt
zu einer galvanischen Zelle kombiniert werden und die gebildete galvanische Zelle formiert wird, wobei
- die mindestens eine negative Elektrode bezüglich ihrer Kapazität zur Aufnahme von Lithium größer dimensioniert wird als die mindestens eine positive Elektrode,
- in die Zelle Lithium in einer Menge eingebracht wird, welche die Kapazität der mindestens einen positiven Elektrode zur Aufnahme von Lithium mindestens um den Faktor 1,2 überschreitet und
- die mindestens eine negative Elektrode bezüglich ihrer Kapazität zur Aufnahme von Lithium ausreichend groß dimensioniert wird, um das gesamte in der Zelle enthaltene Lithium aufnehmen zu können.

8. Verfahren nach Anspruch 7, **dadurch gekennzeichnet, dass** das Lithium mindestens teilweise über die mindestens eine positive Elektrode in die Zelle eingebracht wird, insbesondere durch Verwendung überlithiierter Kathodenmaterialien oder indem der Kathode metallisches Lithium zugesetzt wird, insbesondere passiviertes metallisches Lithium.

9. Verfahren nach Anspruch 7 oder Anspruch 8, **dadurch gekennzeichnet, dass** das Lithium mindestens teilweise über den Elektrolyten in die Zelle eingebracht wird, insbesondere durch Verwendung eines Leitsalzes, das an der Anode Lithiumionen freisetzen kann.

10. Verfahren nach einem der Ansprüche 7 bis 9, **dadurch gekennzeichnet, dass** das Lithium mindestens teilweise über die mindestens eine negative Elektrode in die Zelle eingebracht wird, insbesondere
- indem die mindestens eine negative Elektrode vorlithiiert wird, bevor sie mit der mindestens einen positiven Elektrode kombiniert wird
und/oder
- indem für die mindestens eine negative Elektrode ein Anodenmaterial verwendet wird, das ein Übergangsmetallnitrid der Formel Li_{3-X}M_{X}N aufweist und/oder
- indem für die mindestens eine negative Elektrode ein Anodenmaterial verwendet wird, das passiviertes metallisches Lithium enthält.

## Claims

1. Formed secondary galvanic cell, comprising
- at least one positive electrode, which contains a metal compound which is capable of reversibly intercalating and deintercalating lithium in the form of ions,
- at least one negative electrode, which contains a carbon compound which is capable of reversibly intercalating or deintercalating lithium in the form of ions and a metal and/or semi-metal which can be alloyed with lithium,
- an electrolyte via which lithium ions can migrate between the at least one positive electrode and the at least one negative electrode and
- mobile lithium which is available for intercalation and deintercalation processes in the electrodes,
wherein
- the capacity of the at least one negative electrode for taking up lithium exceeds that of the at least one positive electrode,
- the at least one negative electrode has a higher capacity than is required for taking up the entire mobile lithium contained in the cell and
- the mobile lithium is contained in the cell in an amount that exceeds the capacity of the at least one positive electrode for taking up lithium.

2. Galvanic cell according to Claim 1, **characterized in that** it contains the mobile lithium in the form of lithium ions and - where appropriate, also in a reduced, metallic form.

3. Galvanic cell according to Claim 1 or Claim 2, **characterized in that** the capacity of the at least one negative electrode for taking up lithium exceeds that of the at least one positive electrode at least by a factor of 1.2, preferably by a factor in the range between 1.4 and 2.5.

4. Galvanic cell according to one of the preceding claims, **characterized in that** the at least one negative electrode has a higher capacity than is required for taking up the entire mobile lithium contained in the cell by a factor in the range between 1.1 and 2.

5. Galvanic cell according to one of the preceding claims, **characterized in that** the amount of mobile lithium in the cell exceeds the capacity of the at least one positive electrode for taking up lithium at least by a factor of 1.1, preferably by a factor in the range between 1.2 and 2.

6. Battery, comprising at least one galvanic cell according to one of the preceding claims.

7. Method for producing a battery, in particular a battery according to Claim 6, in which
- at least one positive electrode which contains a metal compound which is capable of reversibly intercalating and deintercalating lithium in the form of ions,
- at least one negative electrode which contains a carbon compound which is capable of reversibly intercalating or deintercalating lithium in the form of ions and a metal and/or semi-metal which can be alloyed with lithium and
- an electrolyte
are combined to a galvanic cell and the produced galvanic cell is formed, wherein
- the at least one negative electrode is dimensioned in terms of its capacity for taking up lithium to be greater than the at least one positive electrode,
- lithium is introduced into the cell in an amount that exceeds the capacity of the at least one positive electrode for taking up lithium at least by a factor of 1.2 and
- the at least one negative electrode is dimensioned in terms of its capacity for taking up lithium to be sufficiently large for being capable of taking up the entire lithium contained in the cell.

8. Method according to Claim 7, **characterized in that** the lithium is introduced into the cell at least partially via the at least one positive electrode, in particular by using over-lithiated cathode materials or by adding metallic lithium, in particular passivated metallic lithium, to the cathode.

9. Method according to Claim 7 or Claim 8, **characterized in that** the lithium is introduced into the cell at least partially via the electrolyte, in particular by using a conductive salt which is capable of releasing lithium ions at the anode.

10. Method according to one of Claims 7 to 9, **characterized in that** the lithium is introduced into the cell at least partially via the at least one negative electrode, in particular
- by pre-lithiating the at least one negative electrode before it is combined with the at least one positive electrode
and/or
- by using an anode material which comprises a transition metal nitride of the type Li_{3-X}M_{X}N for the at least one negative electrode
and/or
- by using an anode material which contains passivated metallic lithium for the at least one negative electrode.

## Revendications

1. Cellule galvanique secondaire formée, comprenant
- au moins une électrode positive, laquelle contient un composé métallique qui est capable de stocker et de déstocker de manière réversible du lithium sous la forme d'ions,
- au moins une électrode négative, laquelle contient un composé de carbone qui est capable d'emmagasiner et de délivrer de manière réversible du lithium sous la forme d'ions, et un métal et/ou un semi-métal qui peut être allié avec le lithium,
- un électrolyte par le biais duquel les ions de lithium peuvent migrer dans un sens et dans l'autre entre l'au moins une électrode positive et l'au moins une électrode négative, ainsi que
- du lithium mobile qui est disponible pour les opérations de stockage et de déstockage,
- la capacité de l'au moins une électrode négative à absorber du lithium étant supérieure à celle de l'au moins une électrode positive,
- l'au moins une électrode négative possédant une capacité supérieure à celle qui est nécessaire pour absorber la totalité du lithium mobile présent dans la cellule et
- le lithium mobile est contenu dans la cellule dans une quantité qui dépasse la capacité de l'au moins une électrode positive à absorber le lithium.

2. Cellule galvanique selon la revendication 1, **caractérisée en ce qu'**elle contient le lithium mobile sous la forme d'ions de lithium et aussi éventuellement dans une forme métallique réduite.

3. Cellule galvanique selon la revendication 1 ou la revendication 2, **caractérisée en ce que** la capacité de l'au moins une électrode négative à absorber du lithium dépasse celle de l'au moins une électrode positive au moins du facteur 1,2, de préférence d'un facteur dans la plage entre 1,4 et 2,5.

4. Cellule galvanique selon l'une des revendications précédentes, **caractérisée en ce que** l'au moins une électrode négative possède une capacité supérieure d'un facteur dans la plage entre 1,1 et 2 à celle qui est nécessaire pour absorber la totalité du lithium mobile présent dans la cellule.

5. Cellule galvanique selon l'une des revendications précédentes, **caractérisée en ce que** la quantité de lithium mobile dans la cellule dépasse la capacité de l'au moins une électrode positive à absorber du lithium au moins du facteur 1,1, de préférence d'un facteur dans la plage entre 1,1 et 2.

6. Batterie, comportant au moins une cellule galvanique selon l'une des revendications précédentes.

7. Procédé de fabrication d'une batterie, notamment d'une batterie selon la revendication 6, avec lequel
- au moins une électrode positive, laquelle contient un composé métallique qui est capable de stocker et de déstocker de manière réversible du lithium sous la forme d'ions,
- au moins une électrode négative, laquelle contient un composé de carbone qui est capable d'emmagasiner et de délivrer de manière réversible du lithium sous la forme d'ions, et un métal et/ou un semi-métal qui peut être allié avec le lithium,
- un électrolyte
sont combinés en une cellule galvanique et la cellule galvanique réalisée est formée,
- l'au moins une électrode négative, pour ce qui concerne sa capacité à absorber du lithium, étant dimensionnée plus grande que l'au moins une électrode positive,
- du lithium peut être introduit dans la cellule dans une quantité qui dépasse la capacité de l'au moins une électrode positive à absorber du lithium au moins du facteur 1,2 et
- l'au moins une électrode négative, pour ce qui concerne sa capacité à absorber du lithium, étant dimensionnée suffisamment grande pour pouvoir absorber la totalité du lithium contenu dans la cellule.

8. Procédé selon la revendication 7, **caractérisé en ce que** le lithium est introduit dans la cellule au moins partiellement par le biais de l'au moins une électrode positive, notamment en utilisant des matériaux de cathode surlithiés ou en ajoutant à la cathode du lithium métallique, notamment du lithium métallique passivé.

9. Procédé selon la revendication 7 ou la revendication 8, **caractérisé en ce que** le lithium est introduit dans la cellule au moins partiellement par le biais de l'électrolyte, notamment en utilisant un sel conducteur qui peut libérer des ions de lithium au niveau de l'anode.

10. Procédé selon l'une des revendications 7 à 9, **caractérisé en ce que** le lithium est introduit dans la cellule au moins partiellement par le biais de l'au moins une électrode négative, notamment
- **en ce que** l'au moins une électrode négative est pré-lithiée avant qu'elle soit combinée avec l'au moins une électrode positive,
et/ou
- **en ce qu'**un matériau d'anode est utilisé pour l'au moins une électrode négative, lequel possède un nitrure de métal de transition de la formule Li_{3-X}M_{X}N et/ou
- **en ce qu'**un matériau d'anode est utilisé pour l'au moins une électrode négative, lequel contient du lithium métallique passivé.
